# EUROPÄISCHE PATENTSCHRIFT

(11) **EP 1 432 597 B1**
(45) Veröffentlichungstag und Bekanntmachung des Hinweises auf die Patenterteilung: **31.05.2006**
(21) Anmeldenummer: 02767485.2
(22) Anmeldetag: 13.09.2002
(51) Int. Cl.: B60R 7/00

(54) **GEPÄCKNETZ**
LUGGAGE NET
FILET A BAGAGES

(30) Priorität: 05.10.2001 DE 10149103
(43) Veröffentlichungstag der Anmeldung: 30.06.2004
(73) Patentinhaber: Schwarzbich, Jörg, 33615 Bielefeld (DE)
(72) Erfinder: Schwarzbich, Jörg, 33615 Bielefeld (DE)
(74) Vertreter: Wiebusch, Manfred
(86) Internationale Anmeldenummer: PCT/EP2002/010289
(87) Internationale Veröffentlichungsnummer: WO 2003/031231

(56) Entgegenhaltungen:
- EP-A- 0 288 386
- DE-A- 2 938 357
- DE-U- 8 601 047

## Beschreibung

Die Erfindung betrifft ein Gepäcknetz mit einem Tragteil und einem parallel zur dem Tragteil liegenden Maschenwerk aus Netzfäden, die an geschlossenen Rändern des Gepäcknetzes an dem Tragteil befestigt sind.

Solche Gepäcknetze sind häufig an der Rückseite der Rückenlehne von Fahrzeugsitzen angebracht. Das Tragteil wird dann zumeist durch ein Formteil aus Kunststoff gebildet, das die Rückwand der Rückenlehne des Sitzes oder zumindest einen Teil dieser Rückwand bildet.

Zur Befestigung des Maschenwerkes an dem Tragteil wird üblicherweise ein U-förmig gebogener Drahtbügel eingesetzt, der durch die Randmaschen des Maschenwerkes verläuft und somit das Maschenwerk gespannt hält und der seinerseits mit Schellen, Schrauben oder dergleichen an dem Tragteil befestigt ist, das durch einen hohlen Rahmen aus Kunststoff und/oder eine im wesentliche flache Grundplatte gebildet wird. Die Öffnung des Gepäcknetzes ist zumeist am oberen Rand ausgebildet. Dort werden die Maschen des Maschenwerkes durch ein dehnbares Band gehalten, das zwischen den freien Schenkeln des Drahtbügels gespannt ist.

Bei dieser bekannten Konstruktion verursacht die Herstellung des Drahtbügels, das Einfädeln dieses Drahtbügels in das Maschenwerk und die Befestigung des Drahtbügels an dem Tragteil hohe Material- und Montagekosten. Außerdem wird durch den Drahtbügel das Erscheinungsbild des Gepäcknetzes beeinträchtigt. Wenn der Drahtbügel an einer flachen Grundplatte anliegt, besteht auch Verletzungsgefahr, wenn ein Fahrzeuginsasse, beispielsweise bei einem unerwarteten Bremsmanöver, mit dem Knie an dem verhältnismäßig steifen Drahtbügel anstößt. Häufig ist deshalb an der Grundplatte ein Randwulst ausgebildet, der das Gepäcknetz einfaßt, so daß der Drahtbügel in einer flachen Mulde der Grundplatte liegt. In diesem Fall entsteht jedoch zwischen dem Randwulst der Grundplatte und dem Drahtbügel eine schwer zu reinigende Fuge. Falls der Drahtbügel in einem hohlen Rahmen untergebracht ist, der seinerseits an der Grundplatte anliegt, muß zwischen dem Rahmen und der Grundplatte eine Fuge vorhanden sein, durch die das Maschenwerk aus dem Rahmen austritt.

Aus DE 29 38 357 A1 ist ein Gepäcknetz nach dem Oberbegriff des Anspruchs 1 bekannt, bei dem die Netzfäden unter Bildung von Schlaufen durch Löcher des Tragteils hindurchgezogen und auf der Rückseite mit Hilfe eines durch die Schlaufen gefädelten Bandes fixiert sind.

Aufgabe der Erfindung ist es, ein Gepäcknetz der Eingangs genannten Art zu schaffen, bei dem das Maschenwerk auf einfache und sichere Weise an dem Tragteil befestigt ist.

Diese Aufgabe wird erfindungsgemäß mit den in Anspruch 1 angegebenen Merkmalen gelöst.

Erfindungsgemäß ist das Maschenwerk an den geschlossenen Rändern des Gepäcknetzes unmittelbar an dem Tragteil befestigt, so daß auf einen Drahtbügel oder ein durchgefädeltes Band verzichtet werden kann. Damit entfallen auch das umständliche Einfädeln des Drahtbügels in das Maschenwerk sowie die Befestigung des Drahtbügels an dem Tragteil. Da die Befestigungspunkte für die Netzfäden in den Löchern des Tragteils oder auf der Rückseite des Tragteils liegen, geht von ihnen keine Verletzungsgefahr aus, und sie beeinträchtigen auch nicht das Erscheinungsbild des Gepäcknetzes.

Die Netzfäden können beispielsweise dadurch an dem Tragteil fixiert werden, daß die Schlaufen an Nasen eingehängt werden, die in den Löchern oder am Rand dieser Löcher auf der Rückseite des Tragteils ausgebildet sind. Erforderlichenfalls kann dieser Vorgang durch ein von der Rückseite her an das Tragteil angesetztes Werkzeug unterstützt werden.

Die Fixierung der Netzfäden kann alternativ oder ergänzend auch dadurch erreicht werden, daß die Netzfäden mit dem Tragteil verschweißt werden.

Gegenstand der Erfindung ist außerdem ein Verfahren zur Herstellung des Gepäcknetzes, bei dem die Netzfäden mit Stempeln schlaufenförmig in die Löcher des Tragteils eingedrückt werden.

Die Stempel können so an einem gemeinsamen Montagewerkzeug angebracht sein, daß sie in bezug auf das Werkzeug radial nach außen weisen und radial ausgefahren werden können. Das Maschenwerk kann dann zum Beispiel zunächst flach auf einer Unterlage ausgebreitet und dann mit dem Montagewerkzeug aufgenommen werden. Das Montagewerkzeug wird dabei so aufgesetzt, daß jeder Stempel in eine am Rand des Maschenwerkes liegende Masche eingreift, die später an dem Tragteil fixiert werden soll. Wenn dann die Stempel ausgefahren werden, erfaßt jeder Stempel mit seinem freien Ende den Netzfaden der betreffenden Masche, so daß das Netz aufgenommen und durch die Stempel gespannt gehalten werden kann. So läßt sich das Maschenwerk mit Hilfe des Montagewerkzeugs auf das Tragteil überführen. Nachdem das Montagewerkzeug mit dem Netzwerk auf das Tragteil abgesenkt wurde, werden die Stempel weiter ausgefahren, so daß sie in die Löcher des Tragteil eintreten und dabei die Netzfäden jeweils unter Bildung einer Schlaufe in die Löcher des Tragteils eindrücken.

Wenn sich die Befestigungspunkte für die Netzfäden auf der Rückseite des Tragteils befinden, können sie auch in einem mehr oder minder großen Abstand zu den Löchern des Tragteils angeordnet sein. Hierdurch ist es möglich, auch in den Fällen, in denen der Rand des Gepäcknetzes gekrümmte Abschnitte aufweist und versetzt zu den Knoten des Maschenwerkes verläuft, die unterschiedlichen Maschenlängen so auszugleichen, daß sämtliche Netzfäden im wesentlichen gleichmäßig gespannt sind.

In einer vorteilhaften Ausführungsform ist das Tragteil ein plattenförmiges Formteil aus Kunststoff, das einen erhobenen, der Kontur des Gepäcknetzes folgenden Rand aufweist. In diesem Fall sind die Löcher des Tragteils zweckmäßig in den Innenekken zwischen dem erhöhten Rand und dem flachen Zentralbereich der Platte angeordnet, so daß die Stempel schräg auswärts in diese Löcher eintreten können. Beim Spritzgießen des Tragteil können die Löcher und erforderlichenfalls auch die Nasen, an denen die Netzfäden eingehängt werden, mit Hilfe eines einfachen Formwerkzeugs ohne Kernzüge hergestellt werden.

Im folgenden werden Ausführungsbeispiele der Erfindung anhand der Zeichnung näher erläutert.

Es zeigen:
- Figur 1: eine Ansicht eines Gepäcknetzes;
- Figur 2: einen Schnitt längs der Linie II-II in Figur 1;
- Figur 3: einen Schnitt längs der Linie III-III in Figur 2;
- Figur 4: die in Figur 2 dargestellte Einzelheit des Gepäcknetzes in einer Ansicht von unten;
- Figur 5: eine perspektivische Ansicht der Einzelheit gemäß Figuren 2 bis 4;
- Figur 6: die Einzelheit gemäß Figuren 2 bis 5 in einer perspektivischen Ansicht von unten;
- Figur 7: eine Ansicht eines Stempels für die Herstellung des Gepäcknetzes nach Figur 1;
- Figur 8: einen Schnitt längs der Linie VIII-VIII in Figur 7;
- Figuren 9 bis 11: vergrößerte Schnittdarstellungen entsprechend Figur 2, zur Illustration eines Verfahrens zur Herstellung des Gepäcknetzes;
- Figur 12: einen vergrößerten Schnitt längs der Linie XII-XII in Figur 1;
- Figur 13: eine Schnittdarstellung analog zu Figur 2, zur Illustration einer abgewandelten Ausführungsform des Gepäcknetzes; und
- Figur 14: eine Schnittdarstellung analog zu Figur 2, zur Illustration eines alternativen Verfahrens zur Herstellung des Gepäcknetzes.

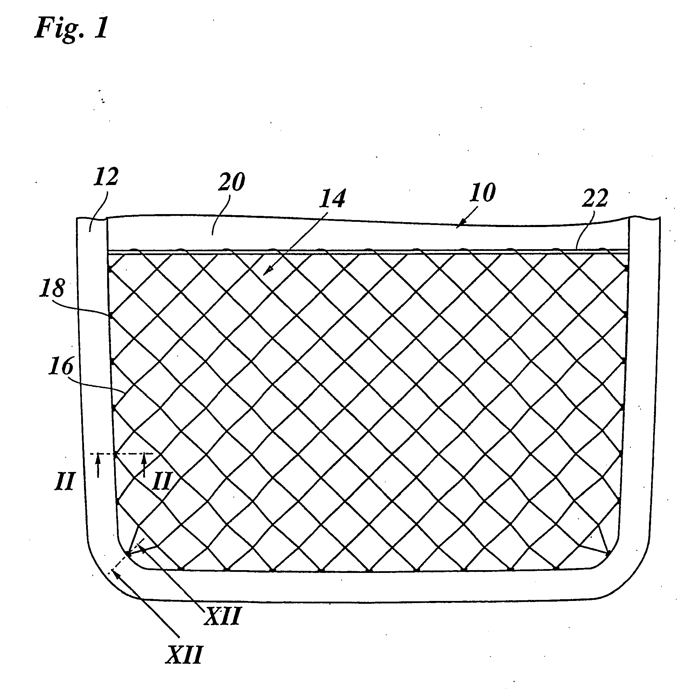

Das in Figur 1 dargestellte Gepäcknetz weist ein nur in einer Teilansicht dargestelltes Tragteil 10 auf, das durch ein Formteil aus Kunststoff gebildet wird. Ein angeformter, etwas erhabener Rand 12 des Tragteils faßt das Gepäcknetz an beiden Seiten und am unteren Rand ein. Das eigentliche Netz wird durch ein Maschenwerk 14 aus Netzfäden 16 gebildet. Die Netzfäden 16, die die Maschen an den seitlichen Rändern und am unteren Rand des Netzwerkes 14 bilden, treten in Löcher 18 ein, die in der Innenecke zwischen dem flachen Mittelteil 20 des Tragteils 10 und dem erhöhten Rand 12 ausgebildet sind. Diese Netzfäden 16 sind auf der Rückseite des Tragteils 10 fixiert, wie weiter unten noch näher beschrieben werden wird.

Am offenen oberen Rand des Gepäcknetzes ist das Maschenwerk 14 durch ein dehnbares Band 22 gehalten, das zwischen den beiden gegenüberliegenden seitlichen Schenkeln des Randes 12 gespannt und dort auf irgendeine geeignete Weise befestigt ist.

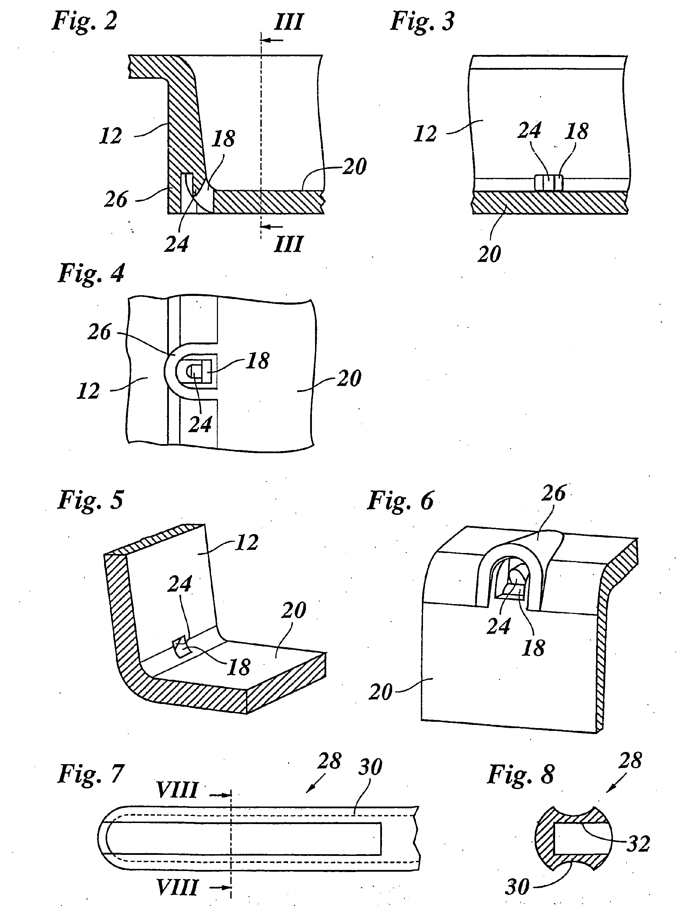

Figur 2 zeigt einen Teilschnitt durch die Innenecke zwischen dem erhöhten Rand 12 und dem flachen Mittelteil 20 des Tragteils 10 an der Stelle eines der Löcher 18. Vom in Figur 2 oberen Rand des Loches 18 springt eine Nase 24 nach unten vor, also in Richtung auf die Rückseite des Tragteils 10. Diese Nase 24 ist auf der dem Loch 18 zugewandten Seite abgeschrägt und ist mit Abstand von einer Schutzhaube 26 umgeben, die in einem Stück mit dem Rand 12 des Tragteils ausgebildet ist.

Wie in Figuren 3 und 4 zu erkennen ist, hat die Nase 24 eine geringere Breite als das rechteckige Loch 18.

Figuren 5 und 6 vermitteln einen räumlichen Eindruck von der Anordnung des Loches 18, der Nase 24 und der Schutzhaube 26. Diese Elemente sind so gestaltet, daß sie beim Spritzgießen des Tragteils 10 problemlos entformt werden können.

Zur Befestigung des Maschenwerkes 14 an dem Tragteil 10 wird jeder Netzfaden 16, der einem der Löcher 18 benachbart ist, in dieses Loch eingezogen und an der Nase 24 eingehängt. Hierzu wird ein Stempel 28 benutzt, wie er vergrößert in Figuren 7 und 8 dargestellt ist.

Der Stempel 28 hat die Form eines länglichen Stiftes mit rundem Querschnitt und abgerundetem Ende. Eine Führungsnut 30 mit halbrundem Querschnitt verläuft durchgehend längs zweier einander diametral gegenüberliegender Mantellinien des Stempels 18 und über das abgerundete Ende. In einer gegenüber den beiden Ästen der Führungsnut 30 um 90° winkelversetzten Position weist der Stempel 38 in seinem Endbereich eine tiefere Nut 32 auf, die zum abgerundeten Ende hin offen ist.

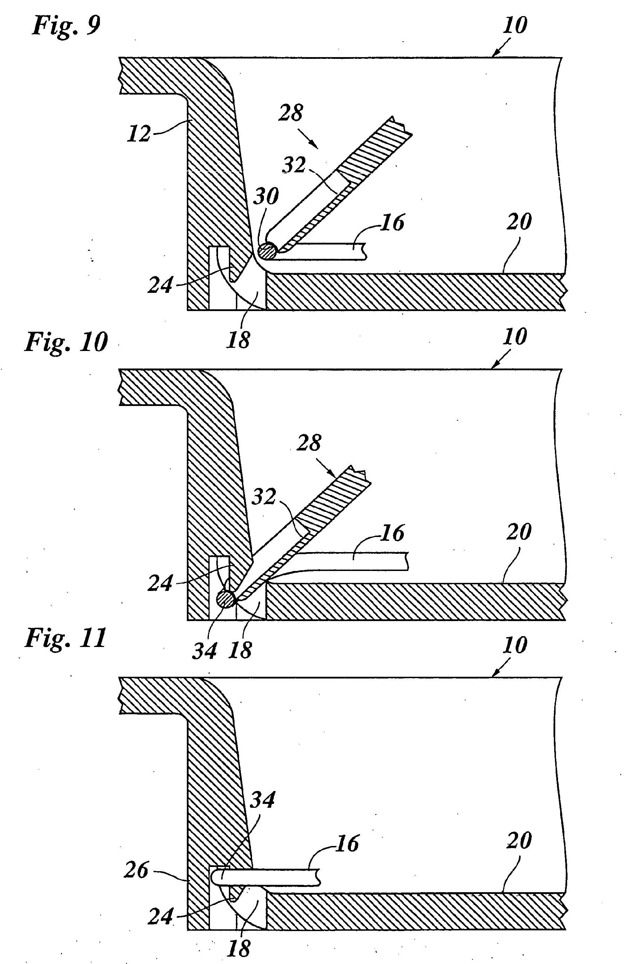

Das Einführen eines Netzfadens 16 in das Loch 18 und das Einhängen des Netzfadens an der Nase 24 ist in Figuren 9 bis 11 veranschaulicht.

In dem in Figur 9 gezeigten Zustand liegt der Netzfaden 16, der die äußere Begrenzung einer Masche am Rande des Maschenwerkes 14 bildet, noch ganz auf der Vorderseite des Tragteils 10. Die gerundete Spitze des Stempels 28 liegt an dem Netzfaden 16 an, der durch die über diese gerundete Spitze verlaufende Führungsnut 30 gehalten wird. In entsprechender Weise ist der Netzfaden jeder Randmasche des Maschenwerkes 14 durch einen zugehörigen Stempel 28 gehalten. Wenn alle Stempel 28 in bezug auf das Maschenwerk schräg nach außen gerichtet sind und wenn mit Hilfe eines Zuggliedes ein Zug auf den Mittelteil des Maschenwerkes ausgeübt wird, werden sämtliche Netzfäden 16 in fester Anlage an den Spitzen der Stempel 28 gehalten, so daß das Maschenwerk 14 mit Hilfe der Stempel 28 in gespanntem Zustand gehalten und gehandhabt werden kann.

Anschließend werden die Stempel 28 in Richtung ihrer jeweiligen Längsachse ausgefahren, wie in Figur 10 gezeigt ist. Dabei treten die Stempel 28 mit ihren Spitzen in die Löcher 18 ein, und die Netzfäden 16 werden unter Bildung einer Schlaufe 34 ebenfalls in die Öffnungen 18 eingefädelt. Die Nase 24 gleitet über den Scheitel der Schlaufe 34 hinweg und wird dann in der Nut 32 des Stempels 28 aufgenommen. Gegebenenfalls kann die Nase 24 dabei auch etwas elastisch zurückfedern.

Da sich sämtliche Stempel 28 mit ihren Spitzen nach außen bewegen, wird in dem Maschenwerk eine Zugspannung erzeugt. Wenn anschließend die Stempel 28 wieder zurückgezogen werden, werden die Schlaufen 34 der Netzfäden 16 durch die Nasen 24 zurückgehalten, und aufgrund der Zugspannung legt sich jede Schlaufe 34 fest um die zugehörige Nase 24, wie in Figur 11 dargestellt ist. Die Schutzhaube 26 verhindert, daß die Schlaufe 34 wieder von der Nase 24 abgestreift werden kann. Da die Nase 24 in Richtung auf die Rückseite des Tragteils 10 vorspringt, bleiben die Schlaufen 34 auch dann fest mit den zugehörigen Nasen 24 in Eingriff, wenn das Maschenwerk 14 nach vorn (nach oben in Figur 11) von dem Tragteil 10 abgezogen wird.

Bei der oben beschriebenen Ausführungsform können die Stempel 28 ausfahrbar an einem nicht gezeigten Träger gehalten sein. Dieser Träger kann dann auch dazu benutzt werden, das Maschenwerk 14, das zunächst auf einer geeigneten Unterlage ausgebreitet ist, mit Hilfe der Stempel 28 aufzunehmen und auf das Tragteil 10 zu übertragen.

In einer anderen Verfahrensvariante ist es denkbar, daß das Maschenwerk 14 zunächst auf den flachen Mittelteil 20 des Tragteils 10 aufgelegt wird und daß dann ein Träger, an dem die Stempel 28 schwenkbar oder flexibel befestigt werden, so auf das Tragteil 10 abgesenkt wird, daß die Spitzen der Stempel 28 in die Randmaschen des Maschenwerkes 14 eintreten und sich dann auf der Oberfläche des Tragteils 10 abstützen. Wenn dann der Träger weiter abgesenkt wird, schwenken oder biegen sich die Stempel 28 nach außen, so daß sie die Netzfäden 16 erfassen und vor sich herschieben und diese schließlich in die Löcher 18 eindrücken. Da die Stempel 28 bei diesem Vorgang zunehmend in die Horizontale geschwenkt werden, werden die Schlaufen 34, nachdem sie in die Löcher 18 eingetreten sind, angehoben und auf die Nasen 24 aufgehängt.

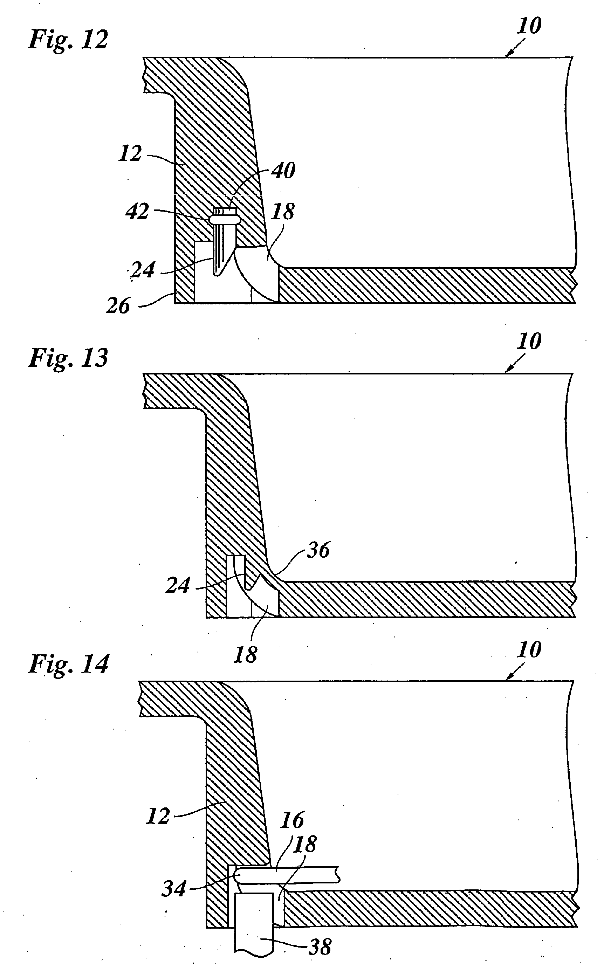

Wie Figur 1 zeigt, liegen die Löcher 18 des Tragteils 10 annähernd auf senkrechten und waagerechten Linien, die Netzknoten des Maschenwerkes 14 miteinander verbinden. Somit werden die am Rand des Gepäcknetzes liegenden Maschen durch die Nasen 24 in der gewünschten Form gehalten, und die Netzfäden 16 haben eine passende Zugspannung. Aufgrund des leicht gekrümmten Verlaufes des Randes 12 kommt es jedoch stellenweise zu Positionsabweichungen zwischen den Löchern 18 und den idealen Positionen der Netzknoten. Figur 12 illustriert eine Möglichkeit, diese Positionsabweichungen dadurch auszugleichen, daß die Nase 24 in größerem Abstand zu dem Loch 18 oder, genauer, in größerem Abstand zur Mündung des Loches 18 in der Vorderseite des Tragteils angeordnet wird. Hierdurch ist es möglich, die Netzfäden 16 beispielsweise auch in den gerundeten Eckbereichen des Gepäcknetzes unter einer geeigneten Zugspannung zu halten.

Im einfachsten Fall kann ein Abrutschen der Schlaufen 34 von den Nasen 24 allein durch eine geeignete Zugspannung des Maschenwerkes 14 (bei leerem Gepäcknetz) und/oder durch verhältnismäßig enge Ausbildung der Löcher 18 erreicht werden. Bei gefülltem Gepäcknetz erlaubt das dehnbare Band 22 ein Nachgeben des Maschenwerkes. Wahlweise können die Schlaufen 24 jedoch zusätzlich dadurch in ihrer an den Nasen 24 eingehängten Position gesichert werden, daß nicht gezeigte Stopfen von der Rückseite des Tragteils 10 her (von unten in Figur 12) in die Löcher 18 eingedrückt werden.

Figur 13 zeigt eine abgewandelte Ausführungsform des Gepäcknetzes, bei der die Mündungen der Löcher 18 auf der Vorderseite des Tragteils 10 zunächst durch eine angeformte Sollbruchstelle 36 verschlossen sind. Bei der Anbringung des Maschenwerkes 14 werden die Sollbruchstellen 36 mit Hilfe der Stempel 28 durchstochen, so daß sich die Schlaufen 34 wieder in der oben beschriebenen Weise in die Löcher 18 einführen und an den Nasen 24 einhängen lassen. Diese Ausführungsform hat den Vorteil, daß die Löcher 28 geschlossen und unsichtbar bleiben, wenn das Tragteil 10 lediglich als Rückwand einer Sitzschale ohne Gepäcknetz eingesetzt wird.

Figur 14 illustriert eine Ausführungsform, bei der die Netzfäden nicht an Nasen eingehängt werden, sondern thermisch oder durch Ultraschall an die Innenfläche des betreffenden Loches 18 angeschweißt werden. Nachdem die Netzfäden beispielsweise wie oben beschrieben mit Hilfe von Stempeln unter Bildung von Schlaufen in die Löcher 18 eingeführt worden sind, wird von der Rückseite des Tragteils 10 her, also von unten in Figur 14, ein Heizstift oder eine Sonode 38 in das Loch 18 eingeführt, und der Netzfaden wird mit der in Figur 14 waagerechten oberen Begrenzungsfläche des Loches 18 verschweißt. Um ein Anschweißen des Netzfadens 16 an der Sonode 38 zu verhindern, kann diese Teflon beschichtet sein. Entsprechendes gilt für einen Heizstift. Falls der Netzfaden 16 selbst nicht aus thermoplastischem Material besteht, kann er in das Kunststoffmaterial des Tragteils eingeschweißt werden.

Dieses Schweißverfahren kann wahlweise auch mit dem zuvor beschriebenen Verfahren kombiniert werden, so daß die durch die Netzfäden 16 gebildeten Schlaufen 34 an den Nasen 24 eingehängt und zusätzlich verschweißt werden. Ebenso ist es denkbar, daß ein der Sonode 38 entsprechender Stift lediglich dazu dient, den Netzfaden 16 auf die Nase 24 aufzuschieben. Wenn die Stempel 28 am freien Ende gabelförmig ausgebildet sind, ist es auch möglich, einen Stift von unten durch die Schlaufe 34 hindurch in den Rand 12 des Tragteils 10 einzustecken und dann dauerhaft in dem Tragteil zu belassen. Diese Möglichkeit ist in Figur 12 illustriert, wo die Nase 24 an einem Stift 40 ausgebildet ist, der einen Rastwulst 42 aufweist und von unten in eine Öffnung des Tragteils 10 eingedrückt wird.

Statt die Netzfäden 16 mit Stempeln in die Löcher 18 einzudrücken ist es in einer anderen Verfahrensvariante auch möglich, die Netzfäden mittels Unterdruck in die Löcher 18 einzusaugen.

## Patentansprüche

1. Gepäcknetz mit einem Tragteil (10) und einem parallel zu dem Tragteil liegenden Maschenwerk (14) aus Netzfäden (16), die an geschlossenen Rändern des Gepäcknetzes unter Bildung von Schlaufen (34) in Löcher (18) des Tragteils eingezogen und in diesen Löchern oder jenseits derselben auf der Rückseite des Tragteils (10) fixiert sind, **dadurch gekennzeichnet, daß** die Schlaufen dardurch fixiert sind, daß sie an am Tragteil ausgebildteten Nasen (24) eingehängt und/oder am Tragteil angeschweißt sind.

2. Gepäcknetz nach Anspruch 1, **dadurch gekennzeichnet, daß** das Tragteil (10) einen flachen Mittelteil (20) und einen gegenüber dem Mittelteil (20) erhabenen Rand (12) aufweist und daß die Löcher (18) jeweils in einer Innenecke zwischen dem Rand (12) und dem flachen Mittelteil (20) angeordnet sind.

3. Gepäcknetz nach Anspruch 2, **dadurch gekennzeichnet, daß** das Maschenwerk (14) am offenen Rand des Gepäcknetzes durch ein dehnbares Band (22) gehalten ist, das zwischen gegenüberliegenden Schenkeln des erhabenen Randes (12) des Tragteils (10) gespannt ist.

4. Gepäcknetz nach Anspruch 3, **dadurch gekennzeichnet, daß** die Nase (24) im Inneren oder am Rand des Loches (18) ausgebildet ist und mit ihrem freien Ende zur Rückseite des Tragteils (10) vorspringt.

5. Gepäcknetz nach Anspruch 4, **dadurch gekennzeichnet, daß** die Nase (24) mit Abstand von einer Schutzhaube (26) umgeben ist.

6. Verfahren zur Herstellung eines Gepäcknetzes nach einem der vorstehenden Ansprüche, **dadurch gekennzeichnet, daß** die Netzfäden (16) des Maschenwerkes (14) mit den freien Enden von stiftförmigen Stempeln (28) erfaßt und unter Bildung von Schlaufen (34) in die Löcher (18) eingeführt und dann an an den Nasen (24) eingehängt und/oder am Tragteil (10) angeschweißt werden.

7. Verfahren nach Anspruch 6, **dadurch gekennzeichnet, daß** die Stempel (28) jeweils eine über das freie Ende verlaufende Führungsnut (30) für den Netzfaden (16) und eine rechtwinklig zu dieser Führungsnut in Längsrichtung des Stempels (28) verlaufende, zum freien Ende des Stempels offene Nut (32) aufweisen und daß die Netzfäden (16), nachdem sie in die Löcher (18) eingeführt worden sind, mit dem freien Ende des Stempels (28) über eine Nase (24) des Tragteils (10) hinweg gehoben werden, bis diese Nase sich in die Nut (32) des Stempels legt und die durch den Netzfaden (16) gebildete Schlaufe (34) hintergreift.

## Claims

1. Luggage net with a supporting part (10) and netting (14) which is disposed parallel to the supporting part and consists of net threads (16) which are drawn into holes (18) of the supporting part at closed edges of the luggage net while forming loops (34) and are fixed in these holes or on the other side thereof at the back of the supporting part (10), **characterised in that** the loops are fixed by being suspended from projections (24) formed at the supporting part and/or being welded to the supporting part.

2. Luggage net according to Claim 1, **characterised in that** the supporting part (10) comprises a flat centre part (20) and an edge (12) which is raised with respect to the centre part (20), and that the holes (18) are in each case disposed in an inner corner between the edge (12) and the flat centre part (20).

3. Luggage net according to Claim 2, **characterised in that** the netting (14) is retained at the open edge of the luggage net by an extensible band (22) which is tensioned between opposite limbs of the raised edge (12) of the supporting part (10).

4. Luggage net according to Claim 3, **characterised in that** the projection (24) is formed in the interior or at the edge of the hole (18) and protrudes with its free end towards the back of the supporting part (10).

5. Luggage net according to Claim 4, **characterised in that** the projection (24) is surrounded at a spacing by a protective hood (26).

6. Method for producing a luggage net according to any one of the preceding Claims, **characterised in that** the net threads (16) of the netting (14) are engaged by the free ends by pin-shaped plungers (28) and introduced into the holes (18) while forming loops (34) and then suspended from the projections (24) and/or welded to the supporting part (10).

7. Method according to Claim 6, **characterised in that** the plungers (28) in each case comprise a guide groove (30), which extends over the free end, for the net thread (16) and a groove (32) which extends at a right angle to this guide groove in the longitudinal direction of the plunger (28) and is open towards the free end of the plunger, and that, after having been introduced into the holes (18), the net threads (16) are raised with the free end of the plunger (28) over a projection (24) of the supporting part (10) until this projection lies in the groove (32) of the plunger and engages behind the loop (34) which is formed by the net thread (16).

## Revendications

1. Filet à bagages comportant un élément porteur (10) et un maillage (14) parallèle à l'élément porteur et constitué de fils pour filet (16) qui sont enfilés dans des trous (18) de l'élément porteur, sur des bords fermés du filet à bagages, pour former des boucles (34), et sont fixés dans ces trous ou au-delà de ceux-ci sur la face arrière de l'élément porteur (10), **caractérisé en ce que** les boucles sont fixées par le fait qu'elles sont suspendues à des ergots (24) réalisés sur l'élément porteur et/ou soudés sur l'élément porteur.

2. Filet à bagages selon la revendication 1, **caractérisé en ce que** l'élément porteur (10) comporte une partie centrale plate (20) et un bord (12) en relief par rapport à la partie centrale (20), et **en ce que** les trous (18) sont disposés chacun dans un angle intérieur entre le bord (12) et la partie centrale plate (20).

3. Filet à bagages selon la revendication 2, **caractérisé en ce que** le maillage (14) sur le bord ouvert du filet à bagages est maintenu par une bande (22) extensible qui est tendue entre des côtés opposés du bord (12) en relief de l'élément porteur (10).

4. Filet à bagages selon la revendication 3, **caractérisé en ce que** l'ergot (24) est réalisé à l'intérieur ou sur le bord du trou (18) et fait saillie par son extrémité libre par rapport à la face arrière de l'élément porteur (10).

5. Filet à bagages selon la revendication 4, **caractérisé en ce que** l'ergot (24) est entouré à distance par un capot de protection (26).

6. Procédé de fabrication d'un filet à bagages selon l'une des revendications précédentes, **caractérisé en ce que** les fils pour filet (16) du maillage (14) sont saisis par les extrémités libres de poinçons (28) en forme de broche et introduits, en formant des boucles (34), dans les trous (18) puis sont suspendus aux ergots (24) et/ou soudés sur l'élément porteur (10).

7. Procédé selon la revendication 6, **caractérisé en ce que** les poinçons (28) présentent une rainure de guidage (30), s'étendant sur l'extrémité libre, pour le fil à filet (16) et une rainure (32) ouverte vers l'extrémité libre du poinçon et s'étendant à angle droit par rapport à cette rainure de guidage, dans la direction longitudinale du poinçon (28), et **en ce que** les fils pour filet (16), après avoir été introduits dans les trous (18), sont soulevés par l'extrémité libre du poinçon (28), au-delà d'un ergot (24) de l'élément porteur (10), jusqu'à ce que cet ergot se place dans la rainure (32) du poinçon et passe derrière la boucle (34) formée par le fil pour filet (16).
